# EUROPEAN PATENT APPLICATION

(11) **EP 3 865 813 A1**
(43) Date of publication of application: **18.08.2021**
(21) Application number: 20290013.0
(22) Date of filing: 15.02.2020
(51) Int. Cl.: G01B 11/245, G01B 11/25

(54) **SCANNING OF OBJECTS**

(71) Applicant: HEWLETT-PACKARD DEVELOPMENT COMPANY, L.P., Spring, TX 77389 (US)
(72) Inventor: DE MARCILLAC, Patrick Jacques Andre Marie Dahey, 38053 Grenoble (FR); ADAMS, Guy de Warrenne Bruce, Bristol, BS1 6NP (GB); BALINSKY, Helen Yelena, Bristol, BS1 6NP (GB)
(74) Representative: Bryers LLP

(57) **Abstract**

Apparatuses and methods for scanning a flow of parts or products of many various types and formats. The apparatus comprises a plurality of light sources and a plurality of detectors located around a scanning volume to observe build parts or products in the scanning volume from different observation angles, the light sources each to direct light of separate wavelengths over a respective field of view. Each detector has at least one filter to isolate at the detector light from one of the light sources from light from the other of the light sources. The apparatus also includes a controller to operate a plurality of the light sources, detectors and filters to form measurement groups to scan the observable surface of objects in the scanning volume simultaneously from different observation angles, to obtain scanning data for generating a 3D model. Once a given part or product is in position in the field of scan the apparatus may perform its scanning without any kinematic movement involved neither for the part nor from any of the system components thus avoiding the movement of functional part sub-components that may occur in between various scans.

## Description

### BACKGROUND

To attain a desired quality of manufactured parts, quality management processes may be implemented in a part production system. Quality assurance (QA) processes are typically used to identify and correct defects in the processes for manufacturing the parts. Quality control (QC) processes are typically used to identify defects in the parts during/after manufacture and to allow defective parts to be discarded from the production flow.

Techniques for inspecting manufactured parts as part of a quality management process involve performing measurements on parts using metrology systems. Metrology systems are typically arranged to repeatedly perform a limited set of measurements over a large number of parts flowing successively in a production flow. Other metrology systems may perform a large number of more detailed measurements, requiring manipulation of the parts which is more costly and thus typically reserved for few samples from which the quality of a large batch of many similar parts may be inferred.

In mass production flows of large numbers of identically manufactured parts, such as those created by molds, metrology systems of these types can be useful in quality assurance and quality control and sampling techniques are well suited.

### BRIEF INTRODUCTION OF THE DRAWINGS

Figure 1 is an illustration of an example system for additive manufacturing of parts which may make use of the present disclosure.
Figure 2 is a block diagram of an example apparatus for scanning build parts which may be used in the system for additive manufacturing of Fig. 1.
Figure 3 is an illustration of another example system for additive manufacturing of parts which may incorporate a plurality of apparatuses of Fig. 2 in a part inspection flow.
Figure 4 is a block diagram of an example apparatus of Fig. 3.
Figure 5 is an illustration of another example system for additive manufacturing of parts which may incorporate a plurality of apparatuses of Fig. 2 in a part inspection flow.
Figure 6 is a flowchart of an example process for scanning build parts which may be employed in operating the apparatus of Fig. 2.

### DETAILED DESCRIPTION

The production flow of additive manufacturing, in which parts are typically formed by fusing build material according to a computer-aided design (CAD) model, differs from mass production flows of large numbers of identically manufactured parts, in that large numbers of different parts can be formed such that sampling techniques are much more difficult to implement.

Additive manufacturing provides for the production of individual parts or small batches of parts using an additive manufacturing apparatus to fuse build material according to a CAD model stored in a CAD system. By sending build jobs for a number of different parts to an additive manufacturing system, a large number of different built parts can be manufactured in a production flow. Although the build process of fusing material is repeatable from build job to build job, the variability of the built parts from job to job and within each job implies a higher quality management burden on assessing the output of the built parts compared to the mass manufacture of identical parts. Thus, in a quality management system for additive manufacture, it may be appropriate to take a large number of detailed measurements of each part in the production flow. However, this implies manipulation of the parts for detailed inspection, which interrupts the production flow of the parts and erodes the advantages of mass manufacture of differently customised parts that additive manufacturing provides.

The following description sets out example apparatuses and methods for the 3D scanning of objects, such as parts formed by additive manufacturing, so as to allow detailed metrology of each part as part of inspection workflow which is integrated with the production workflow and allows quality control and assurance inspection processes to be performed sequentially on build parts or groups of build parts as they emerge from the additive manufacturing process.

The 3D scanning metrology system set out in example apparatuses and methods in accordance with the following description may allow for mapping of the surface of the build parts as observed from different observation angles simultaneously. In this way, observations sufficient to achieve the desired metrology of build parts may be performed in a single, or a small number of observations, in which the part (or group of parts) and the light sources and detectors may remain static. The total observation time for performing sufficient metrology of different build parts may in this way be sufficiently low so as to be performed sequentially in an inspection flow of parts, without interrupting or slowing the production flow for quality management. In this way, time lost in metrology is reduced by reducing or avoiding the need to move the parts or the 3D scanner components entirely, and by running the scanning process around the surfaces of different parts in parallel. In examples, apparatuses and methods of the present disclosure allow simultaneous scanning of the observable surface of the build parts to generate a full 3D model of up to the entire observable surface of the build parts. This full metrology may be performed in a single observation, or a small number of observations. In other examples, the observations of the build parts from different observation angles may be performed sequentially. By providing an arrangement of light sources and detectors, sequential scanning may be performed with the part in a single pose, or with a reduced number of movements to different poses.

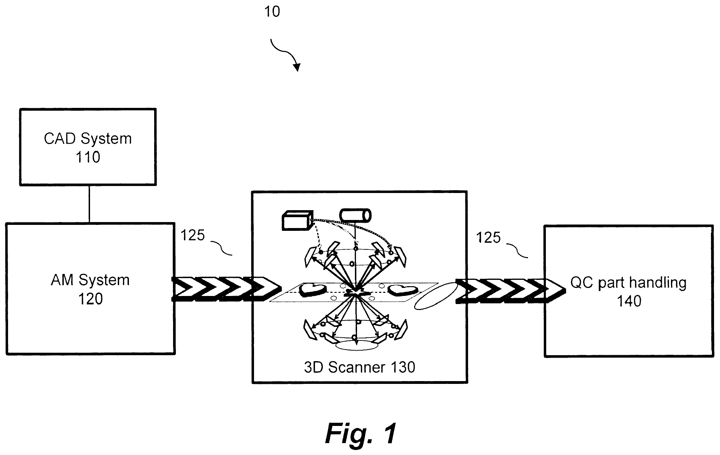

Figure 1 shows illustration of an example production system 100 for additive manufacturing of parts which may make use of the present disclosure. The production system includes a computer-aided design (CAD) system 110 which may store designs for parts to be built in an additive manufacturing process as CAD data which may include a CAD model for the build part which may define the geometric structure of the part to be built. The CAD system 110 may also store product and manufacturing information (PMI) data specifying geometric and non-geometric attributes for the parts to be built, including geometric dimensions and tolerances, 3D annotation and dimensions, surface finish, and material specifications.

The CAD system 110 may send build jobs to an additive manufacturing (AM) system 120 which may form the build parts in accordance with the CAD data and PMI data for the part from the CAD system. The AM system 120 may be one of a various number of different types that build parts from a build material to a design from a CAD system 110. Suitable AM systems 120 may operate by Fused Deposition Modelling, Stereolithography, Selective Laser Sintering, Powder Bed Fusion, Material Extrusion, or the like, without limitation. Generally, to form the build parts, the AM system 120 may first go through a building process according to the received CAD data and PMI data by selectively fusing build material such as powder in a packed bed. Once formed, the build part may be finished by unpacking the part from the powder bed, and cooling it and cleaning it. Multiple parts of the same or different design may be formed at the same time in a packed bed of powder. Sequential manufacture of batches of build jobs from different powder beds forms a flow of production parts from the AM system 120.

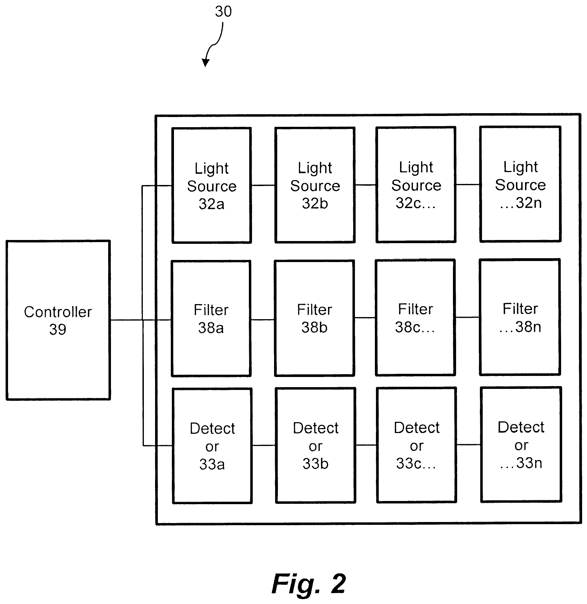

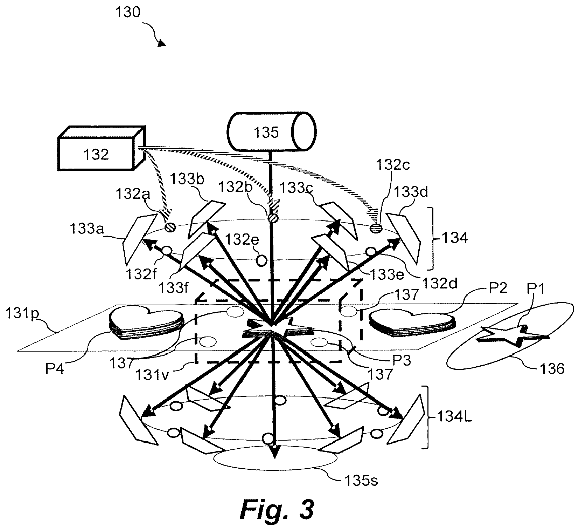

The production flow of built parts which may come from such AM system 120, or from any other manufacturing flow or production flow (for example harvested fruits that must meet a certain set of PMI characteristics to be eligible in a given sales category) carried by a carriage system 125 through a an inspection flow to be scanned by a 3D scanner 130, which may be in accordance with the examples shown in Figs. 2 and 3, to perform sufficient metrology on the different built parts to inform the subsequent handling of the parts in a Quality Control (QC) part handling 140 station. The 3D scanner 130 may provide a 3D model of the scanned surface of the parts as a component of a metrology system, which may include other measures besides the 3D surface scanning. By comparison of the results of the 3D scanner 130 and the wider metrology system with the quality standards required for each part, which may be specified in the CAD data and/or PMI data from the CAD System 110 (for example, the geometric dimensions and tolerances for the part) the QC part handling 140 may decide to pass the finished part for provision for its intended use, if the part measurements satisfy the required quality standards. On the other hand, if the part measurements do not satisfy the required quality standards, the QC part handling 140 may decide to discard the built part as waste or move it in a different sales category. By performing sufficient metrology of the built parts sequentially in the inspection flow to assess whether or not the required quality standards for the different parts are satisfied on a part-by-part basis, the quality of the built parts can be adequately controlled. By using the 3D scanner 130 in accordance with the examples shown in Figs. 2 and 3, this metrology can be performed in line with a production flow, without interruption or several such systems may be operated in parallel to cope with a greater flow, or some buffering may be tolerated to temporarily accommodate for a higher flow while coping with an un-interrupted average flow. By monitoring both the fit and the discarded parts, QA processes can be deployed to adjust the AM system 120 if necessary to improve the build parts and reduce any defects that may recur due to deficiencies in the build process.

Referring now to Figs 2 and 3, an example apparatus 130 for 3D scanning of build parts, which may be used in the system 100 for additive manufacturing of Fig. 1, will now be described.

The 3D scanner 30 of Fig 2. comprises a plurality of light sources 32a, 32b, 32c...32n and a plurality of detectors 33a, 33b, 33c...33n located around a scanning volume to observe build parts in the scanning volume from different observation angles. The light sources 32a, 32b, 32c...32n are each to direct light of separate wavelengths over a respective field of view.

Each detector 33a, 33b, 33c...33n has at least one filter 38a, 38b, 38c...38n to isolate at the detector 33a, 33b, 33c...33n light from one of the light sources 32a, 32b, 32c...32n from light from the other of the light sources.

The 3D scanner 30 also comprises a controller 39 to operate a plurality of the light sources 32a, 32b, 32c...32n, detectors 33a, 33b, 33c...33n and filters 38a, 38b, 38c...38n to form measurement groups of a single light source and at least one detector, to scan the observable surface of objects in the scanning volume from different observation angles. Where a measurement group includes a single light source and a single detector a measurement pair is formed. In examples, a measurement group may comprise a single light source and two detectors, forming a stereo view of the illumination of the light source by the detectors, which may provide enhanced scanning data compared to a measurement pair. In other measurement groups, more than two detectors can be used.

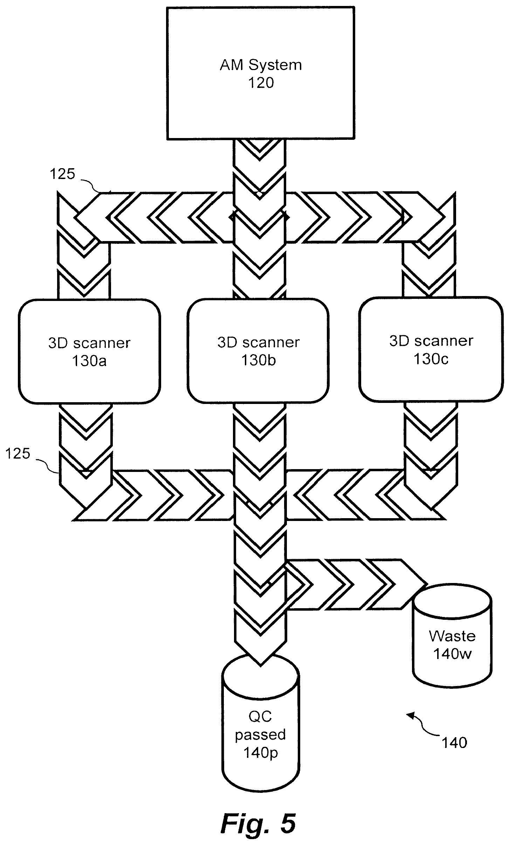

Referring now to Figs 3, 4 and 5, another example apparatus 130 for 3D scanning of build parts, which may be used in the system 100 for additive manufacturing of Fig. 1, will now be described. In examples of this apparatus, a plurality of 3D scanners 130a, 130b, 130c may be provided in an inspection flow (see Fig. 5). In other examples, only a single 3D scanner may be provided.

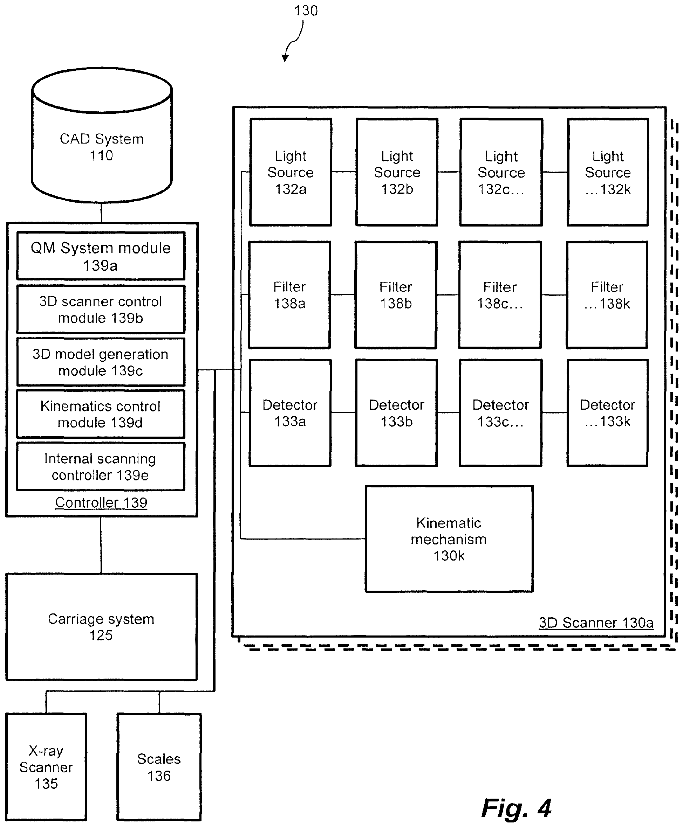

The example 3D scanner apparatus 130 shown in Figure 3 receives build parts P1, P2, P3, P4 in sequence for scanning. Although not represented as such in the figures, in the context of this document it must be understood that the term "each part" may also mean each "group of parts". As shown, the build parts P1, P2, P3, P4 may be formed to different designs according to the build job sent to the AM system 120 from the CAD system 110. The build parts P1, P2, P3, P4 arrive from a production flow carried by the carriage system 125, and may be advanced through scanning stations in the 3D scanner 130 by a kinematic mechanism 130k (see Fig. 4) which may include mechanical pushers (not shown in Fig. 3). The 3D scanner 130 may include a 3D scanning station, as shown for part P3, at which build parts are supported in a scanning volume 131v on a transparent support plate 131p while measurements of the part surface are performed by simultaneous observation from around the build part, including from above and below the scanning volume, while the part P3 remains static. At this station, the interior of the build part may also be scanned, for example by an X-ray scanner 135 arranged above the scanning volume 135v, and an X-ray sensor plate 135s arranged below the scanning volume 135v. The 3D scanner 130 may also include a weighing station comprising a scale 136, as shown for part P1, incorporating a load sensor, at which the part is weighed. The 3D scanner 130 may also include two wait stations, as shown for parts P2 and P4, at which the next parts for scanning and weighing are readied to be advanced through the inspection flow.

The scanning and weighing of the parts, and their advancement sequentially through the inspection flow, may be sufficiently quick to keep pace with the production flow so that the average rate of part production does not have to be slowed to allow for sufficient part metrology to be performed in the quality management system.

The 3D scanner 130 of Figs. 3 and 4 comprises twelve light sources 132a, 132b, 132c...132k and a twelve detectors 133a, 133b, 133c...133k located around the scanning volume 131v. Locating the light sources 132a, 132b, 132c...132k and detectors 133a, 133b, 133c...133k around the scanning volume 131v allows build parts P1, P2, P3, P4 in the scanning volume 131v to be observed from different observation angles. As noted above in relation to Fig 2, in other examples a different number of light sources and detectors may be provided. The number of light sources and detectors and their arrangement around the scanning volume may be such that sufficient measurements may be performed in one or a small number of static observations to assess whether or not the required quality standards for the different parts are satisfied.

In the example shown in Fig. 3, six light sources 132a, 132b, 132c, 132d, 132e, 132f and six detectors 133a, 133b, 133c, 133d, 133e, 133f are arranged in alternating order around an upper ring 134U above the scanning volume 131v. A similar arrangement of six light sources and six detectors is arranged in a lower ring 134L underneath the scanning volume 131v, providing twelve light sources 132a...132k and twelve detectors 133a...133k in total. The light sources are detectors in the upper ring 134U and lower ring 134L are orientated to, respectively, illuminate and observe build parts P1, P2, P3, P4 in the scanning volume 131v from different directions.

The light sources 132a...132k are each sources of light of separate wavelengths. That is, the light sources 132a... 132k may be such that a plurality of the light sources 132a...132k can illuminate objects in the scanning volume 131v simultaneously with light of separate wavelengths, to allow for simultaneous and separate observation of the objects as illuminated from different light sources 132a...132k using filters to isolate the separate wavelengths. That is, the light sources 132a...132k include illumination groups of light sources that have spectra with separate narrowband or wideband non-overlapping peaks. The emission spectra of the light sources 132a... 132k in the illumination groups may not be completely separated, and there may be some spectral crossover. However, the different light sources in an illumination group for use in simultaneous illumination of the scanning volume may each have a sufficiently separate and dominant peak so as to be separately and simultaneously observable from the other light sources in the group using filters complementary for the spectrum of each light source. In the way, the light sources 132a...132k may be grouped into groups of two or more light sources each with separate wavelengths, so as to have separately observable light sources in the group. On the other hand, all of the light sources 132a...132k may provide separate wavelengths so that they can all be used at the same time, such that they all form a single group.

In examples, illumination groups of light sources may be arranged such that two illumination groups may simultaneously illuminate the objects in the scanning volume. This may be achieved by arranging light sources in the two groups such that light sources having the same or similar wavelength spectra or peaks are arranged on diametrically opposite sides of the scanning volume so that they illuminate opposite sides of the built objects, such that, for example, their structured light patterns do not overlap and can still be separately observed. In this way, for example, the six light sources in the upper ring 134U may have the same six wavelengths as the opposite light sources of the six light sources in the lower ring 134L. This duplication of wavelengths further simplifies simultaneous observation around the scanning volume.

The light sources 132a... 132k may emit light of separate wavelengths in the visible range, or in other suitable wavelengths of the electromagnetic spectrum for use in 3D scanning, including infrared and ultraviolet. Each light source m132a... 132k ay individually generate light, which may be generated having the desired spectrum (such as red, green and blue LEDs or laser diodes), or the spectrum may be shaped using a filter for the light before it illuminates the scanning volume. On the other hand, as in the example shown in Fig. 3, the light sources 132a... 132k may be provided with their light from a common light source 132, filtered to separate out different wavelengths of light or via diffraction mechanism splitting that light source 132 into various wavelengths each directed (for example by fibre optics) into the scanning volume 131v. The light sources 132a... 132k may be diffuse, instantaneously illuminating across the surfaces of objects in the scanning volume, or they may provide points of light which are scanned across the scanning volume to illuminate across the surface of the objects for scanning over time. The light may be from a coherent, or a non-coherent source.

The detectors 133a... 133k are any suitable detector for use with the light sources 132a... 132k to detect the light so as to perform a 3D scan of its surface. The detectors 133a... 133k may be imaging detectors to capture images of objects in the scanning volume 131v, or photodetectors arranged to capture an amplitude of reflected light incident on the detector.

In the example, structured light may be used to perform 3D scanning of build parts in the scanning volume 131v. That is, the light sources 132a, 132b, 132c, 132d, 132e, 132f in the upper ring 134U and the light sources in the lower ring 134L each project light having a known structured pattern, such as light and dark lines, across a respective field of view on objects in the scanning volume 131v. By observing the way the pattern deforms when the light strikes the surface of build parts in the scanning volume, depth information can be retrieved allowing scanning data representative of three dimensional locations of the observed surface to be generated. By operating the light sources 132a... 132k to illuminate the build parts with structured light from different illumination angles and by operating the detectors 133a...133k to observe the reflected structured light from different observation angles, scanning data covering different observed and illuminated parts of the surfaces of the build parts can be generated.

In the example, the separate wavelengths of structured light of the light sources 132a, 132b, 132c, 132d, 132e, 132f in the upper ring 134U and the light sources in the lower ring 134L are generated by diffracting the light from a single white light source 132, and directing separated wavelengths of the light to the different light sources for use in providing the structure light patterns.

To provide for the separate observation of light from specific light sources at the detectors 133a...133k, each detector is provided with at least one filter 138a...138k to isolate at the detector light from one of the light sources from light from the other of the light sources. That is, the twelve detectors 133a...133k each have respective filters 138a...138k (see Fig. 3), each filter arranged to transmit to the detector light only corresponding to a respective light source in each group of light sources, with light from the other light sources being rejected, for example by absorption or reflection. In examples, the filters 138a... 138k may be placed in front of each detector 133a... 133k, filtering light from its field of view that passes to the detector. In other examples, the filters 138a... 138k may be integrated into the detectors 133a...133k. For example, the detectors 133a... 133k may be all colour cameras that include a filter. In examples, the detectors 133a... 133k and filters 138a...138k may be cameras each with a colour filter array, such as a Bayer filter. In examples, the other detected colours that are not emitted by the paired light source can be discarded in software or hardware.

In this way, a plurality of the light sources 132a... 132k can simultaneously illuminate the built parts in the scanning volume, and their illumination can be separately observed by separate ones of the detectors 133a...133k having filters corresponding to the different light sources. Thus, scanning data can be generated simultaneously from multiple different observation angles and illumination angles, facilitating the parallel capturing of 3D scans of the observed surface of built parts enabling coverage of the surface to be built up from multiple simultaneous observations.

The arrangement of light sources, filters and detectors may allow measurement groups to be formed. Each measurement group includes a single light source and at least one paired detector filtered to observe the built parts illuminated by that paired light source only. Each measurement group gives scanning data of the 3D locations of the surface of the built parts as illuminated by the light source and observed by the or each detector in the measurement group.

The operation of the 3D scanner 130 is controlled by a controller 139 (see Fig. 4). The controller 139 comprises a number of control modules for controlling the functions of the 3D scanner 130. The controller 139 may be provided as a general purpose computing device having a non-volatile memory storing software instructions for implementing the control modules, and a central processing unit (CPU) which when executes the software, implements the control modules as logical functions. The controller may be communicatively coupled to the CAD system 110 and carriage system 125, as well as the 3D scanner 130 including to the light sources 132a...132k, the detectors 133a...133k, the filters 138a...138k, the kinematic mechanism 130k, and the X-ray scanner 135 and scales 136. Where production system 100 includes multiple 3D scanners 130a, 130b, 130c in the inspection flow, for example as shown in Fig. 5, the controller may be coupled to the plural 3D scanners 130a, 130b, 130c to control each of them. On the other hand, in other examples, each 3D scanner 130a, 130b, 130c may be provided with a separate controller. The 3D scanner controller 139 may be provided as a single computing apparatus, or distributed across multiple computing apparatus and different components of the production system 100. For example, the CAD system 110 may implement parts of the controller 139.

In other examples, the light sources, filters and detectors may combine to provide 3D scanners operating by other appropriate techniques, in which simultaneous scanning from multiple aspects is enabled by the use of filtering techniques. For example, the light sources, filters and detectors may perform 3D scanning optical coherence tomography. Similarly, in other examples, other appropriate filtering techniques may be used to enable simultaneous scanning of objects from multiple aspects. For example, the filtering may be performed by different modulation of the light at each of the light sources, and demodulation of the detected light by a demodulation signal for the selected light source of the measurement group. That is, the light sources of a plurality of the 3D scanners may emit modulated light, and the filter for each scanner permits isolation of light of the modulation of the respective light source for that 3D scanner. In other examples, the filtering may be performed by different polarization of the light at each of the light sources, and polarization filtering of the light for detection in a measurement group by the polarization of the selected light source of the measurement group.

The controller 139 may include a Quality Management (QM) system module 139a to identify, for example, from the carriage system 125, the identity of the built parts P1, P2, P3, P4 entering the inspection flow. For example, the carriage system may track each part in the inspection flow and identify them using a part ID that refers to a digital record for that specific build part, which may be stored in CAD system 100, or in another database. The QM system module 139a may also be to obtain, for example from CAD system 100, computer-aided design (CAD) data, and/or product and manufacturing information (PMI) data, related to built parts P1, P2, P3, P4 to be scanned. The QM system module 139a may use the part ID provided by the CAD system to identify the digital record for part P3 and obtain it from the CAD system 100 before, during or after scanning of the part P3. The QM system may also use a first capture of the 3D scan to identify the type of part in scope and fetch the corresponding CAD amongst a list of expected CADs known by the CAD system 100 and hence fetch its corresponding PMI such that further guided measurements may be triggered according to that PMI.

The controller 139 may include a 3D scanner control module 139b to operate a plurality of the light sources, detectors and filters to form measurement groups, to scan the observable surface of objects in the scanning volume simultaneously from different observation angles, to obtain scanning data for generating a 3D model.

In the example, 3D scanner control module 139b may control the 3D scanner 130 during scanning such that all the light sources 132a...132k are controlled to illuminate the built part P3 simultaneously, and operate the detectors 133a...133k to image the built part P3, using their respective filters 138a...138k to isolate and image only the light of a corresponding light source 132a...132k, such that 12 measurement groups are formed, each for forming 3D scanning data of an observation of a different part of the surface of the built part. For example, the detector 133a may form a measurement group with light source 132a using filter 138a arranged to exclude the light from simultaneously illuminating the build part P3 from light sources 132b...132k. Indeed, the arrangement shown provides for 12 measurement groups formed by pairs of single light sources and single detectors. Other arrangements of light sources, detectors, and filters that provide measurement groups may be provided, depending on the coverage required to observe the built parts of different designs (for example, built parts with complicated designs having many cavities and obstructions may require a larger number of observations to capture a sufficient 3D model, and so more measurement groups may be provided), or to obtain sufficient coverage to satisfy the required quality standards. For example, the 3D scanners 130a, 130b, 130c may each have different numbers and arrangements of light sources and detectors.

In other examples, the filters 138a...138k may be operable, for example by the 3D scanner control module 139b, to change the wavelength of light transmitted to the detector, and the light source with which the detector is paired, for example by changing the filter to a filter with a different transmission wavelength complementary to a different light source. For example, the detector 133b may form a measurement group with light source 132a and light source 132b by using a changeable filter at 138b. Thus, both the detectors 133a and 133b may form measurement groups with the light source 133a, allowing a stereoscopic structured light image to be formed by imaging the same structured light pattern from light source 113a from different observation angles. In this way, the twelve light sources 132a...132k and twelve detectors 133a...133k may be combined in overlapping groups used to provide 12 different stereoscopic observations of the surface of the built parts from different angles when the built part is in a single static pose. Alternatively, a filter 138b may allow a given detector to capture two or more illuminations wavelengths simultaneously from which two or more corresponding images may be derived by computing treatment thus saving the time and complexity to change the filter. For example, the detectors 133a...133k and filters 138a...138k may be all colour cameras with integrated colour filters such as Bayer filters, allowing for filtering of the light in hardware or software.

Each observation by a measurement group indicates that the 3D scan generated by the measurement group includes location information capturing 'what can be seen' from the or each detector's position, for example from the or each detector's line of sight taking into account occluded areas or hidden features in the surface of the object. The scanning data generated by a measurement group may not include 'unobserved' parts of the surface in the field of view of the detector that couldn't be seen by the detector due to occlusion from the line of sight of the detector. In this way, when a 3D model of the part is generated by merging the scanning data from each measurement group using a 3D model generation module 139c, as described below, then this merged data and generated 3D model may include only what is collectively 'observable' from each of the detectors. Unobserved sections may be omitted. In other examples, 'missing' data from unobserved sections of the surface of built parts may be filled in by 3D model generation module 139c by interpolation during the merging of the data and generation of the 3D model. On the other hand, a denser scanning of the surface may be used (for example, using a differently arranged 3D scanner). In other examples, the part or light sources and detectors may be moved (for example using kinematic mechanism 130k, under control of a kinematics control module 139d) to try to observe the unobserved parts of the surface of the built parts in a different pose.

As a plurality of the light sources 132a...132k have separate wavelengths, this allows for their simultaneous detection and observation at different detectors 133a...133k. That is, two different wavelengths of light from different light sources may be observed at the same using different filters at different detectors. It is not required that the start time and end time of the observations correspond for the light sources to be observed simultaneously. Rather, the light from the two different light sources may simply be observed at overlapping times.

This allows for parallelisation of observations, and for 3D scanning of multiple aspects of the surface of built parts to build up sufficient scan coverage in a reduced time. Thus, in illumination groups of two or more light sources each having different wavelengths, and detectors for observing the illumination of the different light sources of the illumination group with complementary filters, to form measurement groups, the built parts in the scanning volume may be simultaneously observed under illumination by all of the light sources in the group, allowing a group of 3D scans of different aspects of the surface of the built parts to be captured at the same time.

Where sufficient light sources and detectors are provided around the built parts arranged so as to provide observations of the built parts covering their entire surfaces, it is possible for the 3D scanner to be operated by the 3D scanner control module 139b to generate scan data to provide a full 3D model covering the entire surface of the built parts without having to move the built parts to allow observation of unobserved aspects thereof into view. Where the light sources are provided as multiple groups the light sources in each group having different wavelengths for simultaneous observation, with the different groups having overlapping wavelengths, the groups of light sources may be operated in turn to simultaneously illuminate and observe the surface of the built parts in a small number of separate observations, through which the built parts may remain static. The 3D scanner 130, for example the scanner control module 139b, may know, from the CAD data and PMI data for the part to be scanned obtained from the CAD system 110, which vetting dimensions are of interest for the quality assessment of each part, the scanner control module 139b may stop scanning the part as soon as each sufficient measurements have been taken for the quality assessment. This allows scanning to be terminated early in some cases, and for the part to be moved to its next station, allowing the sequence of parts to move forward early and throughput to be increased. For example, when the scanner 130 is scanning a cylindrical part and only the top radius of the cylinder is in sight while the bottom is occluded, if the CAD data, or PMI data only specifies Geometric Dimensions and Testing requirements for the top radius, the scanning can be stopped when only the top radius has been measured. Conversely, the scanner control module 139b may trigger deeper inspection of the part when a quality assessment is not yet possible. For example, lower arrays of light sources and detectors 134L may be activated, or the part may be manipulated by kinematic mechanism 130k to a new pose.

In the example shown in Figs. 3 and 4, all the light sources 132a... 132k around the scanning volume 131v emit light at separate wavelengths, and all the detectors 133a... 133k have respective filters 138a... 138k for isolating the wavelength of one of the light sources 132a... 132k. Thus, in the example, the 3D scanner 130a allows the simultaneous capture of scanning data covering the entire observable surface of the built parts, allowing a full 3D model of the parts to be created from a single, static observation.

In examples, the 3D scanner may be configured and operated by the 3D scanner control module 139b to observe the surface of the 3D parts in a single, static observation of all or successive groups of light sources simultaneously illuminating the built parts. Alternatively, the building up of the 3D model may be performed by the 3D scanner control module 139b in a small number of static observations (in examples, in examples at most two, or at most three) between which the built part, the light sources, and/or the detectors are moved to different positions to observe the built parts in different poses. This movement may be by the kinematic mechanism 130k under control of kinematics control module 139d, for example, turning the built parts over to reveal previously obscured surfaces of the built parts. Alternatively, the 3D scanner may be provided with separate stations at which light sources and detectors are arranged to observe different parts of the surfaces of the built parts.

Generally, where a support for the built parts is provided that allows for observation around the desired parts of the surfaces of the built parts, and where sufficient light sources and detectors are provided to observe those surfaces, it is possible to operate the 3D scanner to form a 3D model of the built parts sufficient for satisfying the required quality standards in a single, static observation of all or successive groups of light sources simultaneously illuminating the built parts, without requiring kinematics to move the built parts to different poses. Other such suitable supports include the formation by the AM System 120 of removable or frangible sprues integrated with the built parts by which the built parts can be supported in free space for observation, or any other such support structure which allows observation of the entire, or the desired parts of the surfaces of the built parts.

Where no such support is provided (for example when the built parts are supported for observation on an opaque surface), or where the arrangement of light sources and detectors is insufficient to observe the desired parts of the surfaces of the built parts in a single observation, the kinematic mechanism 130k may be adapted to move the built parts or the arrangement of light sources and detectors to reveal the unobserved parts of the surfaces of the built parts.

In examples, the 3D scanner may be arranged to observe the entire surface of the built parts in a single observation, or in multiple observations, so as to form a full 3D model of the built parts. In observing the entire surface of the built parts, 100% coverage of every single part of the surface of built parts is not necessarily achieved. Instead, by observing the entire surface, the surface may be observed from detectors around the object with the intention that the edges of the fields of view of the detectors as they fall on the objects more or less overlap throughout all the solid angles around the object. However, there may be small gaps between the fields of view, such that 100% coverage is not obtained in the production of a full 3D model. Indeed, the observations of the surface to generate the 3D model may include only the parts of the surface that were observed, and does not include parts of the surface that are unobservable due to, for example, small gaps in coverage, or parts of the surface being hidden or occluded due to the structure and form of the part itself.

In examples, the 3D scanner may be arranged to intentionally observe less than the entire surface of the built parts, or to observe only the parts of the surfaces of the built parts that are of interest, for example, for quality control measurements, in a single, or over multiple observations. For example, the 3D scanner may scan parts of the surfaces of the parts giving less than 100% coverage, giving only 90% coverage, or 75% coverage. In examples, the built parts may be observed to give 50% coverage. In examples, the number of light sources and detectors used by the same 3D scanner may vary from built part to built part, depending on the design of the built part being scanned. The 3D scanner may be arranged so as to observe the parts to perform metrology sufficient to assess whether or not the built parts satisfy the quality standards required for the parts and which may be known via the PMI itself obtained by part type identification or by part ID acquisition.

This simultaneous observation of multiple aspects of the built parts to perform parallel 3D scans allows capture of detailed measurements of differently formed built parts P1, P2, P3, P4 in a shortened capture duration, requiring no or little manipulation of the parts, allowing sufficient metrology (whether of the entire surface or less than 100% coverage) to be performed in the inspection flow at a rate which may match the rate of built parts in the production flow. Indeed, in examples, the 3D scanner may generate a 3D model of observable surface of build parts (which may be a full 3D model of the entire surface) in an observation time of less than 10 seconds, which may be in a single or across multiple observations. In examples, the observation time may be less than 8 seconds, or less than 6 seconds, or less than 4 seconds, or less than 2 seconds, or less than 1 second, or less than 0.5 seconds. The actual generation of the 3D model may be performed by the 3D model generation module 139c of the controller 139 subsequent to the observation being completed, and not represent part of the observation time.

The controller 139 may also include a 3D model generation module 139c. Once the observation(s) of the built parts is performed by the light sources and filtered detectors under control of the 3D scanner control module 139b, the 3D model generation module 139c may generate, from the light detected at the detectors, merged scanning data representative of three dimensional locations of the observed surface of scanned objects to reconstruct a 3D model of the observed surface of scanned build parts.

That is, the output of each measurement group is scanning data representative of three dimensional locations of the observed surface of scanned objects as observed by the or each detector of that measurement group. The scanning data may, in examples, be structured as a range map in 3D space of identified locations on the surface from the observation. In other examples, the scanning data may have a different, suitable data structure.

The processing of the light signals received at the detectors to create the scanning data may be performed by the 3D model generation module 139c. In other examples, the processing of the light signals received at the detectors to create the scanning data may be performed by the 3D scanner control module 139b. Where the measurement groups provide structured light scanners, the scanning data may be produced by processing and analysing the image of the pattern of the structured light as it falls on and is deformed by the surface of the built parts, as observed by the or each detector, to calculate the depth and location information for observed locations on the surface.

In the example, the twelve light sources 132a... 132k and twelve detectors 133a...133k provide twelve different sets of simultaneously captured scanning data showing different parts of the surface of the built part P3, which can be merged to provide combined scanning data including locations covering around the surface of the part P3. In the example, the merged scanning data covers the entire surface of the built part P3.

To facilitate the merging of the scanning data from different measurement groups, 2D coplanar fiducial markers 137 may be provided in fixed locations in the scanning volume 131v, for example on the support plate 131s around the scanning station. These fiducial markers 137 reflect light in the field of view of each measurement group, and so provide points of reference at locations that are invariant between the different scanning data.

Thus, in examples, to generate merged scanning data to reconstruct a 3D model of observable surface of build parts, the 3D model generation module 139c may register scanning data generated from the measurement groups by aligning the observed 2D fiducial markers 137 to each other in each scan. In examples, the different scanning data may be stitched together by globally aligning the observed locations on the surface of the built part by matching and aligning the surface form and features of the built part themselves. Registration may be achieved by the 3D model generation module 139c using alignment of one or both of fiducial markers or of surface features to generate the merged scanning data. Following the merging of the scanning data, a single merged scanning data record may be produced by the 3D model generation module 139c, which includes the scanning data from each measurement group, registered and aligned in 3D space.

Using the merged scanning data, the 3D model generation module 139c may then reconstruct, from the observed locations of the observed surface of scanned objects in the registered scanning data, a 3D model of the observed surface of the scanned build object. In examples, the reconstruction of the 3D model for the scanned build object may be formed by joining the observed locations, which may be provided as a point cloud in the merged scanning data, by forming surfaces, in examples, triangular planar surfaces, between adjacent points. Scanning at once may avoid movement of functional subcomponents of the parts between various scanning, which may happen when the scans are performed at different scanning stations or when part kinematics are involved in the process. In examples, to provide a more smoothed surface, the merged scanning data may be processed to exclude noise and outliers in the scanning signal, or the surfaces formed between the points in the scanning data may be smoothed or interpolated. The output of the 3D model generation module 139c is a 3D model representing the surface of the built parts as observed by the scanner 130. The resultant 3D model is then provided to the QM system module 139a for performing quality control and handling of the built parts.

In performing quality management processes in an additive manufacturing production system 100, providing a 3D scanner 130 for scanning and forming a 3D model of the built part in-line with the inspection flow is useful for measuring and identifying defects in the form and structure of the built parts as visible from their surface. However, defects in the production of built parts may manifest themselves internally, in the structure of the built part, in the way of density variations, in such a way that is not visible from the surface and would not be identified by performing a 3D scan with 3D scanner 130. Therefore, to provide further quality control of the built parts inline in the inspection flow, an X-ray scanner 135 may also be provided in the inspection flow, arranged above the scanning volume 135v, and an X-ray sensor plate 135s arranged below the scanning volume 135v. These provide for non-destructive testing of the built parts through 2D or 3D scanning of the interior of the built parts, through radiography or tomography. A weighing station comprising scales 136, as shown for part P1, incorporating a load sensor, may also be provided to facilitate investigation of the overall mass and the density distribution within the part. Aligning the X-ray scanner 135 to scan the build parts internally at the scanning station as shown for P3, with the parts in the same position as when they are scanned by the 3D scanner, allows the internal and external metrology of the part to be performed with the part in the same orientation and configuration, which may allow alignment of the 3D surface model with the internal scan of the part in the same position, and it may avoid movement of functional subcomponents of the parts between internal and external scanning, which may happen when the scans are performed at different scanning stations. For 2D internal scanning, the X-ray scanner 135 may be able to capture a density picture of the part according to the projected angle. For 3D internal scanning, the X-ray scanner 135 may be provided as an X-ray tomography system made either from rotating X-ray scanner(s) relative to the 3D optical scanner system or multiple X-Ray scanners pre-set in position relative to the 3D optical scanner system.

Thus, the X-ray scanner 135 may scan build parts entering the scanning volume in use and generate density data representative of the density of the build part. Similarly, the scales 136 may generate, for example using a load sensor, weight data representative of the weight of build parts entering the scanning volume. The resultant density data and weight data may be provided by the internal scanning module 139e, together with the 3D model, to the QM system module 139a for performing quality control and handling of the built parts.

QM system module 139a, is in receipt of both CAD data used by the AM system 120 for building the build parts and also metrology data from scanning results of the build parts by 3D scanner 130, X-ray scanner 135 and scales 136. The CAD data may be received from the CAD system 110, and may include the computer-aided design (CAD) data, and/or product and manufacturing information (PMI) data related to build parts P1, P2, P3, P4. The metrology data may include the 3D models of the build parts P1, P2, P3, P4 provided by the 3D model generation module 139c and the density data and weight data may be provided by the internal scanning module 139e.

Amongst each build parts P1, P2, P3, P4 identified by the part ID received from the CAD system 110, the QM system module 139a may identify the digital record for part P3 received from the CAD system 100 and compare the scanning results for the build parts (i.e. the 3D model, density data and weight data) with the received CAD and/or PMI data for that part the QM system module 139a may then provide the results of the comparison for relation to the data record of the scanned build part. For example, the data record for the part P3 as stored in the CAD system 110 may be updated with the results of the comparison.

The results of the comparison may also be provided to the QC part handling system 140. As shown in Fig. 5, the QC part handling system 140 may assess the results of the comparison and determine whether the built parts meet the required quality standards. If so, the QC part handling system 140 may direct the carriage system 125 to carry the part the QC pass station 140p for provision for its intended use. On the other hand, if the comparison does not satisfy the required quality standards, such that a defect in the built part is identified, the QC part handling system 140 may decide to discard the built part to waste station 140w. The comparing, triaging and directing of the built parts to the QC pass station 140p or waste station 140w may be controlled by the controller 139 or CAD system 110, or another component of the production system 100.

As shown in Fig. 5, in examples of the production system, a plurality of 3D scanners may be provided, the example shown including three such 3D scanners 130a, 130b, 130c. A plurality of the 3D scanners may have different arrangements of light sources, detectors and filters to provide a plurality of different scanning volumes. To provide for different scan densities or arrangements, to facilitate scanning of parts having more, or less, complex designs, a plurality of the arrangements of light sources, detectors and filters may be to scan the surface of objects in the scanning volumes using a different number of scans. In the example in Fig. 5, scanner 130a may have twelve scanners and detectors arranged to scan around the entire surfaces of objects, scanner 130b may have 18 scanners and detectors arranged to scan around the entire surfaces of objects, and scanner 130c may have 24 scanners and detectors arranged to scan around the entire surfaces of objects. Thus, in the example of Fig. 5, the carriage system 125 is to provide build parts in an inspection flow to one of the plurality of different scanning volumes 130a, 130b, 130c. The controller 130 may control the carriage system 125 to direct the built parts to the appropriate one of the 3D scanners 130a, 130b, 130c, based on an evaluation of data representative of the build part to be scanned. For example, the controller 130 may evaluate how complex the surface and structure of the built parts is from the CAD data stored therein. The controller 130 may then operate the carriage system 125 to convey build parts to be scanned to an appropriate scanning volume.

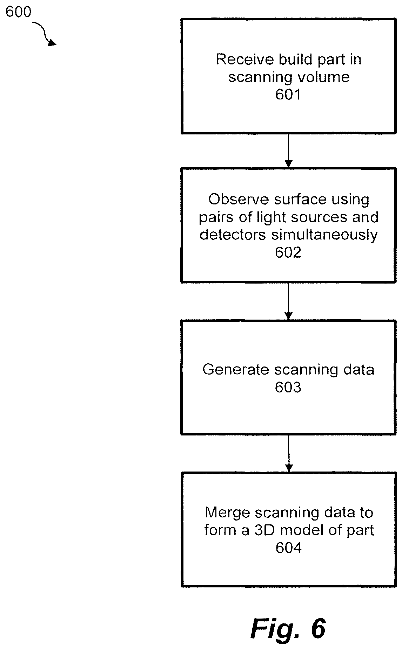

An example process 600 for scanning built parts P1, P2, P3, P4 by operating the 3D scanner 130 shown in Figs. 2, 3 and 4 will now be described with reference to Fig. 6.

In 601, a build part P1, P2, P3, P4 may be received in scanning volume 131v, for example from carriage system 125.

In 602, the surface of the build part P1, P2, P3, P4 may be observed using groups of single light sources and one or more detectors simultaneously, as described above in relation to Figs 2, 3 and 4. The process at 602 may include operating a plurality of light sources 132a...132k arranged around the scanning volume 131v to simultaneously illuminate build parts in the scanning volume 131v with light of separate wavelengths over a respective field of view from different illumination angles. The process at 602 may include isolating at each of a plurality of detectors 133a...133k arranged around the scanning volume 131v to observe the build parts P1, P2, P3, P4 from different observation angles light from one of the light sources 132a... 132k from light from the other of the light sources using respective filters 138a...138k. The process at 602 may also include changing the filters 138a...138k at each detector 133a...133k to observe light from different light sources from each detector. The process at 502 may also include, detecting for each detector light reflected from the build parts and isolated to be from one of the light sources, to form a measurement group.

In 603, scanning data may be generated. The generation of the scanning data by the 3D scanner may be optional. The process at 603 may include generating using detected light from each measurement group, scanning data representative of three dimensional locations of the surface of scanned build objects P1, P2, P3, P4 in the scanning volume 131v, as observed by the or each detector of the measurement group. The process at 603 may also include merging the scanning data to reconstruct a 3D model of the observed surface of scanned build parts, as described above.

In other examples, for 3D metrology in a part production system, an apparatus may comprise a plurality of light sources and a plurality of detectors located around a scanning volume to observe build parts in the scanning volume from different observation angles, the light sources each to direct light of separate wavelengths over a respective field of view. Each detector may have at least one filter to isolate at the detector light from one of the light sources from light from the other of the light sources. The apparatus may also comprise a controller to operate a plurality of the light sources, detectors and filters to form measurement groups to scan the observable surface of objects in the scanning volume simultaneously from different observation angles to scan the entirety of the surface of the objects. The controller may also generate, from the light detected at each 3D scanner, merged scanning data representative of three dimensional locations of the observed surface of scanned objects to reconstruct a full 3D model of the entire observed surface of scanned build parts.

Although the 3D scanner as described herein is disclosed in the context of scanning parts formed by additive manufacturing, it is to be understood that the scanner has broader applicability to 3D scanning of other objects, for example to form 3D models of the objects rapidly, for example to perform object metrology and assessment of fruits or other products subject to imperfections.

## Claims

1. An apparatus comprising:
a plurality of light sources and a plurality of detectors located around a scanning volume to observe build parts in the scanning volume from different observation angles, the light sources each to direct light of separate wavelengths over a respective field of view;
each detector having at least one filter to isolate at the detector light from one of the light sources from light from the other of the light sources;
a controller to:
operate a plurality of the light sources, detectors and filters to form measurement groups to scan the observable surface of objects in the scanning volume from different observation angles, to obtain scanning data for generating a 3D model.

2. The apparatus as claimed in claim 1, the controller to:
generate, from the light detected at the detectors, merged scanning data representative of three dimensional locations of the observed surface of scanned objects to reconstruct a 3D model of the observed surface of scanned build parts.

3. The apparatus as claimed in claim 1, the controller to:
operate the plurality of the light sources, detectors and filters to form measurement groups to scan the observable surface of objects in the scanning volume simultaneously from different observation angles to scan the surface of the objects for reconstructing a 3D model of the observed surface of scanned build parts.

4. The apparatus as claimed in claim 1, the controller being to operate the plurality of light sources and detectors to simultaneously scan the observable surface of the build parts to generate a full 3D model of the observable surface of the build parts in a single observation in which the build parts, light sources and detectors remain static.

5. The apparatus as claimed in claim 4, further comprising a support for supporting build parts in the scanning volume to allow the measurement groups to scan the entirety of the surface of the objects in a single observation.

6. The apparatus as claimed in claim 1, the controller being to generate a full 3D model of entire observable surface of build parts in an observation time of less than 10 seconds.

7. The apparatus as claimed in claim 1, wherein the measurement groups of light sources and detectors provide structured light scanners, or optical coherence tomography scanners.

8. The apparatus as claimed in claim 1, further comprising:
a broadband light source;
wavelength splitter to split out from the broadband light source light of the separate wavelengths for observations, for provision from a plurality of the light sources forming an illumination group.

9. The apparatus as claimed in claim 1, further comprising 2D fiducial markers located in the scanning volume.

10. The apparatus as claimed in claim 9, wherein, to generate merged scanning data to reconstruct a 3D model of observable surface of build parts, the controller to:
register scanning data generated from the measurement groups by aligning the observed 2D fiducial markers to each other in each scan;
reconstruct, from the observed locations of the observed surface of scanned objects in the registered scanning data, a 3D model of the observed surface of the scanned build object.

11. The apparatus as claimed in claim 1, further comprising one or both of:
an X-ray scanner to scan build parts entering the scanning volume in use, to generate data representative of the density of the build part;
a load sensor to generate data representative of the weight of build parts entering the scanning volume.

12. The apparatus as claimed in claim 1, the controller to:
obtain computer-aided design (CAD) data, and/or product and manufacturing information (PMI) data, related to build parts to be scanned;
compare the scanning results for the build parts with the received CAD and/or PMI data; and
provide the results of the comparison for storage for relation to a data record of the scanned build part.

13. The apparatus as claimed in claim 12, the controller to triage scanned parts for further use or for discarding, based on the results of the comparison.

14. The apparatus as claimed in claim 1, further comprising:
a plurality of arrangements of light sources, detectors and filters to provide a plurality of different scanning volumes, each arrangement to scan the surface of objects in the scanning volumes using a different number of scans; and
a carriage system to provide build parts in an inspection flow to one of the plurality of different scanning volumes;
the controller to operate the carriage system to convey build parts to be scanned to an appropriate scanning volume, based on data representative of the build part to be scanned.

15. A method comprising:
receiving a build part in a scanning volume;
operating a plurality of light sources arranged around the scanning volume to simultaneously illuminate build parts in the scanning volume with light of separate wavelengths over a respective field of view from different illumination angles;
isolating at each of a plurality of detectors arranged around the scanning volume to observe the build parts from different observation angles light from one of the light sources from light from the other of the light sources using respective filters;
detecting for each detector light reflected from the build parts and isolated to be from one of the light sources, to form a measurement group;
generating using detected light from each measurement group, scanning data representative of three dimensional locations of the surface of scanned objects in the scanning volume, as observed by the detector of the measurement group;
merging the scanning data to reconstruct a 3D model of the observed surface of scanned build parts.

16. The method as claimed in claim 15, further comprising changing the filters at each detector to observe light from different light sources from each detector.

17. An apparatus comprising:
a plurality of light sources and detectors located around a scanning volume to observe build parts entering the scanning volume from different observation angles in measurement groups, each measurement group having:
a paired light source, to direct light over a respective field of view, and adetector, to form a measurement group to detect light reflected from objects in the field of view; and
a filter to isolate at the or each detector the light from the paired light source from light from other light sources;
a control module to:
operate a plurality of the light sources and detectors to simultaneously scan the observable surface of objects in the scanning volume to scan the entirety of the surface of the objects in measurement groups;
generate, from the light detected at each detector in the measurement groups, merged scanning data representative of three dimensional locations of the observed surface of scanned objects to reconstruct a full 3D model of the entire observed surface of scanned build parts.

18. The apparatus as claimed in claim 17, wherein a plurality of the light sources emit light at separate wavelengths, and wherein the filter for each detector forming a measurement group with one of the plurality of light sources permits detection only of light of the wavelength of the respective paired light source for that measurement group.
